# EUROPEAN PATENT SPECIFICATION

(11) **EP 0 840 961 B1**
(45) Date of publication and mention of the grant of the patent: **30.10.2002**
(21) Application number: 97918140.1
(22) Date of filing: 17.04.1997
(51) Int. Cl.: H04B 17/00

(54) **SELF-CALIBRATION APPARATUS AND METHOD FOR COMMUNICATION DEVICE**
SELBSTKALIBRIERENDES GERÄT UND VERFAHREN FÜR EINE NACHRICHTENÜBERTRAGUNGSEINRICHTUNG
APPAREIL D'AUTO-ETALONNAGE ET PROCEDE AFFERENT POUR UNITE DE COMMUNICATION

(30) Priority: 23.05.1996 GB 9610826
(43) Date of publication of application: 13.05.1998
(73) Proprietor: Motorola Limited, Basingstoke, Hampshire RG22 4PD (GB)
(72) Inventor: MOHEBBI, Behzad, Wiltshire SN5 9UH (GB); JONES, Alan, Wiltshire SN11 0QG (GB); WILTON, Andy, Newton Abbott, Devon TQ12 4NE (GB)
(74) Representative: Potts, Susan Patricia
(86) International application number: EP9701918
(87) International publication number: WO97044920

(56) References cited:
- EP-A- 0 473 082
- EP-A- 0 639 035

## Description

### Field of the Invention

This invention relates, in general, to a self-calibrating system and is particularly, but not exclusively, applicable to a self-calibrating apparatus and method for a transceiver having an adaptive antenna.

### Summary of the Prior Art

The use of adaptive antennas (AA) in communication systems (particularly frequency division multiplexed (FDM) systems, such as the pan-European Global System for Mobile (GSM) cellular communication and alternate code-division multiple access (CDMA) systems) is becoming increasingly attractive because such adaptive antennas offer general improvements in system performance, and especially handling capacity. As will be appreciated, a high degree of beam accuracy is achieved in an adaptive antenna system by accurately varying the phase and amplitude (magnitude) components of a transmitted wave, typically having a radio frequency. More specifically, phases and magnitudes of a set of transmitted waves, emanating from an array of antenna elements of a transceiver, are varied by "weighting" individual elements in the array such that an antenna radiation pattern (of a base site, for example) is adapted (optimised) to match prevailing signal and interference environments of a related coverage area, such as a cell.

To maintain this high degree of beam accuracy, active and passive components in both a transmit (Tx) chain and a receive (Rx) chain of the transceiver need to be fully calibrated with one another. However, the independent nature (tolerances) of components produces differences between the distinct chains and hence results in the generation of beam-forming errors at the array output. In the extreme, these beam-forming errors result in an error in lobe orientation, e.g. inappropriate radial alignment.

Ideally, the transmit and receive chains should be identical, with identical weighting factors (for the amplitudes and phases) desirable for both inbound and outbound paths. Unfortunately, the generation of beam-forming errors is exacerbated when the coefficients of one chain are interpolated from the coefficients in another chain. This problem is encountered in FDM-type cellular mobile systems, such as GSM and CDMA. For example, weighting of each down-link coefficient (generated for the transmission path from a base station) will typically be determined from an initial up-link transmission from a mobile unit, or the like. Subsequent weighting of each up-link coefficient (used by the mobile) will then be based on a transposition of the down-link coefficients. As such, the use of different frequencies for the up-link and down-link of a channel inherently presents an alignment problem with respect to determining a corresponding phase component for a return channel because weighting of a phase component (to reject interference) is related to the frequency of a received carrier. Consequently, accumulation of independent errors in both chains occurs, which results in excessive differences in the beam patterns of the receive mode and the transmit mode. Indeed, without accurate calibration on the receive and transmit paths, a beam will usually be biased, and will typically possess higher sidelobe levels. More critically though, the angular position of zeros (or "nulls") in the radiation pattern of the antenna array may change such that considerable power is radiated in a direction of an adjacent channel resource (e.g. other co-channel users), thereby generating interference in the adjacent channel resource and effecting system capacity.

EP-A-0639035 discloses a smart antenna for a base station; comprising a plurality of antenna arrays; each capable of forming a multiplicity of separate overlapping narrow beams in azimuth, the arrays being positioned such that the totality of beams formed by the arrays provide a substantially omni-directional coverage in azimuth.

In adaptive antenna systems (as a consequence of amplitude and phase variations of active radio frequency (RF) devices, such as amplifiers), it is crucial that the Tx and Rx chains (paths) are calibrated continuously. Indeed, a calibration procedure for an adaptive antenna system should be devoid of inherent phase and amplitude differences (arising either in the calibration procedure or as a result of system components being subject to performance variation with time), and therefore not capable of introducing erroneous calibration in the distinct Tx and Rx chains.

A need therefore exists for an improved adaptive antenna calibration technique and apparatus that mitigates against the introduction of errors in transmit and receive paths of a communication system.

### Summary of the Invention

In a first aspect of the present invention there is provided a method of calibrating components in at least one of a reception path and a transmission path of a calibration network of a communication device for a communication system containing a plurality of narrowband channels, the method comprising the steps of: modulating a narrowband channel with a relatively broadband signal containing a test sequence to produce an overlaid channel; routing the overlaid channel through a selected complementary one of the reception and transmission paths, the selected path containing components that introduce amplitude and phase variations into the overlaid channel; demodulating the overlaid channel to retrieve the test sequence; determining errors introduced into the test sequence by the selected one of the complementary reception and transmission path; resolving amplitude and phase variations introduced by the components in response to the errors in the test sequence; determining a correction factor appropriate to compensate for these amplitude and phase variations; and applying the correction factor in the calibration network.

The steps of modulating and demodulating are performed by applying a broadband frequency signal commonly generated with respect to both steps. Furthermore, the test sequence has a relatively short pulse rate per bit and a power level relatively low to that of a noise threshold of the narrowband channel.

In a second aspect of the present invention there is provided a device for a communication system containing a plurality of narrowband channels, the device having: a calibration network for calibrating components in at least one of a reception and transmission path of the calibration network; means for modulating a narrowband channel with a relatively broadband signal containing a test sequence to produce an overlaid channel; means for routing the overlaid channel through a selected complementary one of the reception and transmission paths, the selected path containing components that introduce amplitude and phase variations into the overlaid channel; means for demodulating the overlaid channel to retrieve the test sequence; means for determining errors introduced into the test sequence by the selected one of the complementary reception and transmission paths; means for resolving amplitude and phase variations introduced by the components in response to the errors in the test sequence; means for determining a correction factor appropriate to compensate for these amplitude and phase variations; and means for applying the correction factor in the calibration network.

The calibration network may provide weighting factors for a beam pattern of an adaptive array of antenna elements. Indeed, the device may be an adaptive antenna.

The present invention advantageously provides a self-calibrating procedure and apparatus for calibrating both the transmitter and receiver chains of a communication device suitable for use with an adaptive antenna. The self calibration procedure may be an on-going event, or performed as required. Furthermore, one calibration chain need only be used for both the transmitter and receiver, thereby effectively removing any calibration differences between the Tx and Rx paths. Additionally, the calibration procedure principally occurs at baseband (i.e. in a digital form) and therefore substantially eliminates errors caused by signal processing.

The new calibration technique is based on adaptive signal processing, with a complex signal envelope providing a calibration mechanism for both amplitude and phase.

An exemplary embodiment of the present invention will now be described with reference to the accompanying drawings.

### Brief Description of the Drawings

FIG. 1 is a block diagram of a cellular communication system having an adaptive antenna array, which cellular communication system may be adapted to utilise the present invention.
FIG. 2 illustrates a beam pattern for a prior art adaptive antenna array.
FIG. 3 is a detailed block diagram of a transceiver having an associated calibration system according to a preferred embodiment of the present invention.
FIG. 4 depicts a plurality of channels within an available system bandwidth of a conventional communication system.
FIG. 5 shows a channel of a communication system overlaid with a broadband signal, according to the present invention.
FIG. 6 illustrates, in more detail, circuitry used in FIG. 3 to overlay a broadband signal on a channel, as required in FIG. 5.
FIG. 7 illustrates an I-channel and Q-channel error displacement introduced by conventional transceiver equipment, for example.

### Detailed Description of a Preferred Embodiment

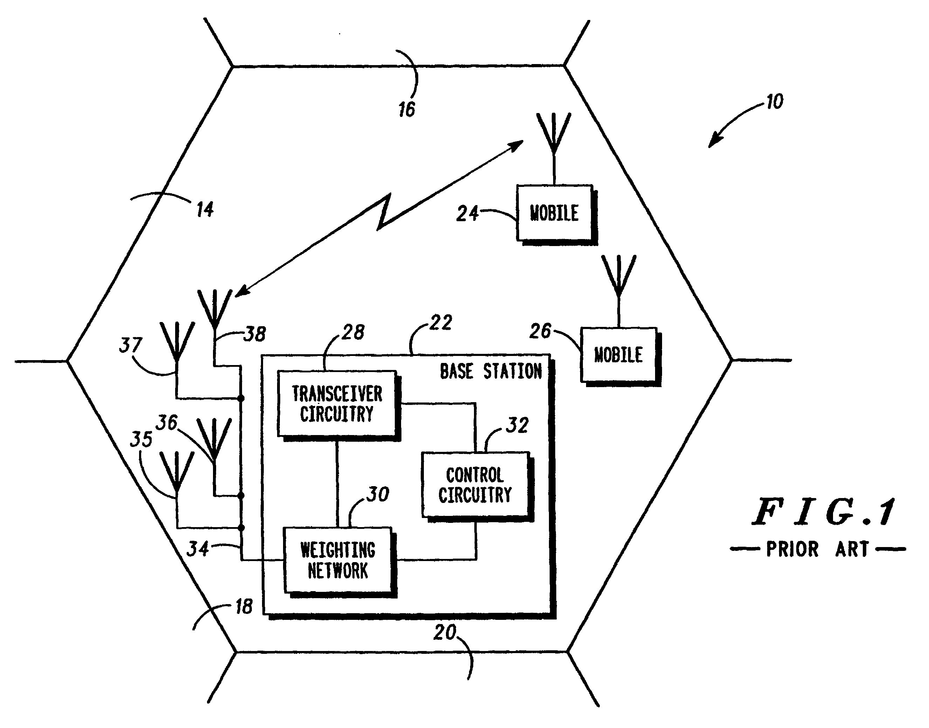

Referring to FIG. 1 there is shown a block diagram of a communication system 10 having an adaptive antenna array, which communication system may be adapted to utilise the present invention. The communication system 10, which may be a cellular communication system such as a Frequency Division Multiplexed (FDM) system, a Time Division Multiplexed (TDM) system (such as used in the digital pan-European GSM cellular communication system) or a Code Division Multiple Access (CDMA) system, includes a plurality of cells 12-20 shown in a conventional hexagonal pattern. Focusing for exemplary purposes on a central cell of the pattern, i.e. cell 12, it will be appreciated that the cell 12 comprises a base station 22 (located to optimise communication coverage in the cell) and a plurality of mobile units 24-26. In this specific instance, only two mobile units are shown, with mobile unit 24 in communication with base station 22. Mobile units 24 and 26 may support voice or data communication and may be suitable for multimode applications, as envisaged in Universal Mobile Telecommunication Systems (UMTS).

The base station 22 comprises transceiver circuitry 28, a weighting network 30, control circuitry 32 and an adaptive antenna array 34 having a plurality of antenna elements 35-38. The control circuitry 30 is coupled to both the transceiver network 28 and the weighting network 32 for the operational control thereof. The weighting network 32 is also coupled to the transceiver network 28 and the adaptive antenna array 32, with each of the plurality of antenna elements 35-38 subjected to a time-varying weighting factor generated by the weighting network 30 in response to the control circuitry 30, as will be understood. With respect to the adaptive antenna array 34 of FIG. 1, the plurality of antenna elements 35-38 may be arranged in either a linear array or a planar array comprising two or more adjacent linear arrays. As will be appreciated, use of a planar array has advantages over the use of a linear array inasmuch as the planar array provides elevational manipulation of the beam (towards a target) in addition to azimuthal manoeuvrability.

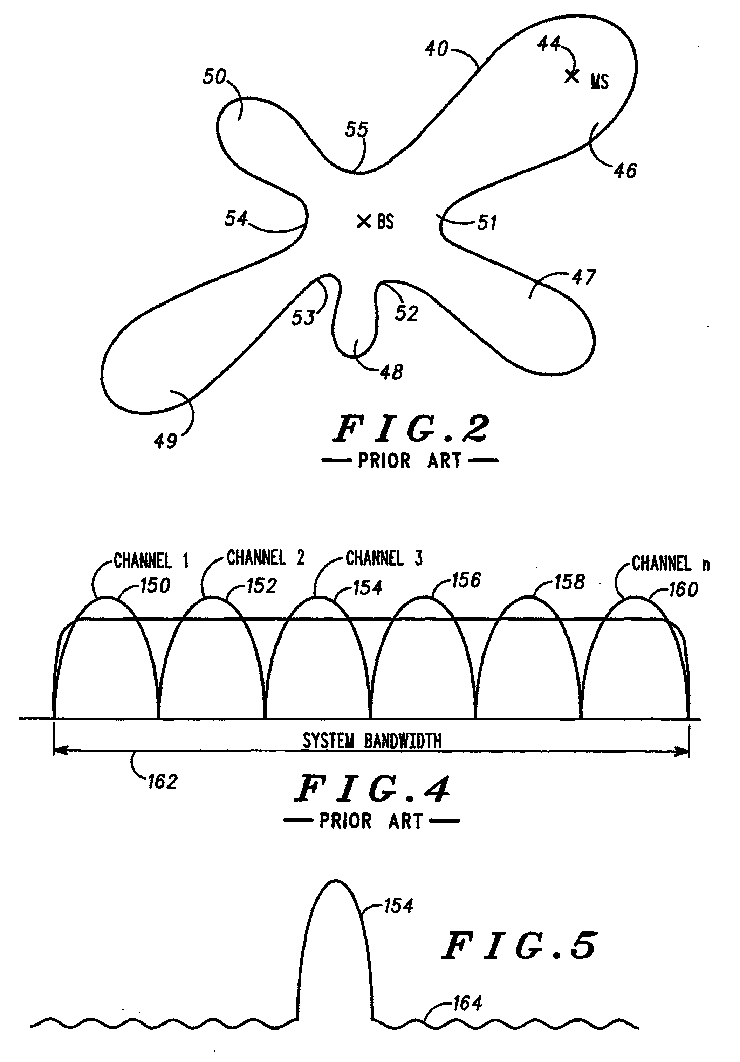

In FIG. 2 there is shown a beam pattern 40 for a prior art adaptive antenna array, such as that realised in FIG. 1. A base station 42 (such as base station 22 of FIG. 1) is responsible for the generation of the beam pattern 40, which base station is located, in this exemplary instance, towards the centre of the beam pattern 40. As can be seen, the beam pattern 40 contains a number of lobes 46-50 (of varying size) and a corresponding number of nulls 51-55. The natures and sizes of the lobes 46-50 and the positions of the nulls 51-55 are determined by the weighting factors applied to the individual antenna elements of the base station 42 by the weighting network 30. In the specific case of FIG. 2, a mobile station 44 is located towards a periphery of lobe 46, and hence may communicate with base station 42.

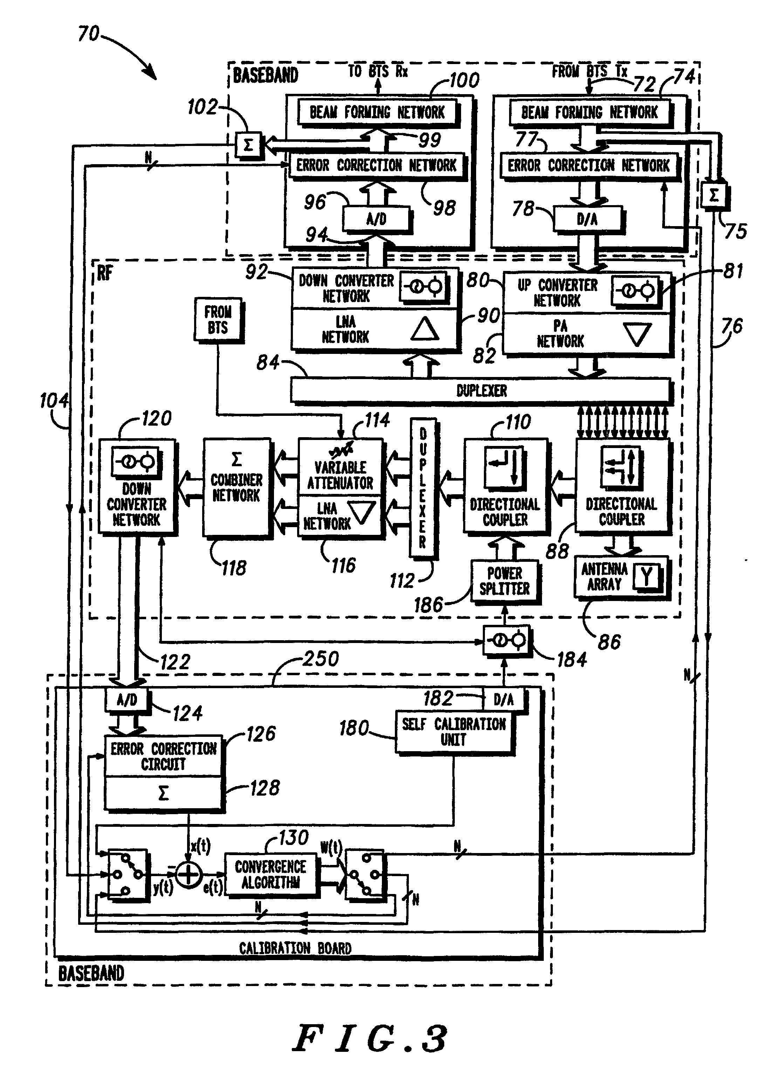

Referring now to FIG. 3, in which there is shown a detailed block diagram of a transceiver 70 having an associated calibration system according to a preferred embodiment of the present invention. The transceiver 70 comprises a transmitter section and a receiver section for respectively transmitting and receiving signals. Although the following description makes specific reference to the transceiver for use in a Base Transceiver Station (BTS), it will be understood that the present invention is not limited to use within such infrastructure equipment, and that adaptation of the transceiver in terms of a mobile communication unit, for example, is contemplated.

Considering the transmitter portion of the transceiver 70, the transmitter portion is responsible for producing a signal in a format suitable for transmission. An encoded signal 72 (at digital baseband from a BTS) is applied to a beam forming network 74 that applies weighting factors (coefficients) suitable for adapting the signal for transmission. Outputs from the beam forming network 74 are tapped for subsequent use in calibration of the transmitter section, with each output typically combined in a first summing unit 75 to provide a first composite signal 76 having an unique characteristic. Particularly, the composite signal is entirely representative of its individual component vectors since a summation of these components is unique. Outputs from the beam forming network 74 are also subjected to an error correction network 77 that modifies the weighting factors to account for discrepancies (errors) subsequently introduced by components in the transceiver portion (which discrepancies would, if left unchecked, adapt a beam pattern ultimately transmitted from the transceiver 70). Furthermore, while still at baseband, each individual error corrected, weighted coefficient is converted from digital to analog form in a digital-to-analog (D/A) converter 78, which digital forms are then modulated onto a channel at an allocated Radio Frequency (RF), e.g. 900 Megahertz (MHz), by an up-converter network 80. As will be understood, the up-converter network 80 comprises a sufficient number of mixers and frequency generators 81 required to modulate each analog input received from the D/A converter 78. Subsequent to up-conversion, a power amplifying network 82 amplifies each signal prior to each of these signals being applied to a first duplexer 84. Outputs from the first duplexer are applied to respective elements in an antenna array 86 (via a first path in a first directional coupler 88) for transmission. The first directional coupler 88 is usually placed immediately behind the antenna array 86 to reduce errors in the feed network, and removes a small fraction of both a received and transmitted signal.

With regard to the function generally performed by an error correction network, such as error correction network 77, such a circuit principally provides error correction for significant errors introduced by active components, such as the up-converter network 80 and the power amplifying network 82 in the transmitter (and corresponding networks in the receiver), and to a lesser extent smaller errors introduced by passive elements, such as the first duplexer 84. As will be appreciated, errors introduced by active components result from these active components having, for example, a temperature dependence, some form of gain variation or a performance deviation induced by ageing of the active component.

The antenna array 86, directional coupler 88 and first duplexer 84 also form part of the receiver section of the transceiver 70, with individual RF signals received at each element of the antenna array 86 being routed through the first directional coupler 88 and first duplexer 84 to a first bank of low noise amplifiers 90. Subsequent to an amplification process, each signal is down converted to baseband in a first down-converter network 92 to provide individual signals 94 to a first analog-to-digital (A/D) converter 96. Digital signals corresponding to those originally received by each of the elements in the antenna array 86 are then fed through an error correction network 98 which corrects for errors introduced into the received signals by the components in the receive chain, with resultant error corrected received signals 99 each being supplied to receiver circuitry of a BTS via a beam forming network 100. The resultant error corrected received signals 99 are also tapped prior to application to the beam forming network 100 for subsequent use in calibration of the receiver section, with each output typically combined in a second summing unit 102 to provide a second composite signal 104 having an unique characteristic.

The transceiver 70 further includes error correction and calibration circuitry, operative at digital baseband, for correcting errors introduced into transmitted and received signals by components within the transceiver 70, as previously explained. As will be understood, in order for calibration of either the transmit or receive chain to occur, it is necessary to attempt to replicate an unprocessed signal, i.e. to reproduce an uncorrupted signal that was originally applied to either the transmit or receive chain. As such, the transceiver 70 additionally includes a second directional coupler 110 coupled to the first directional coupler 88, with the second directional coupler 110 arranged to receive signals passed through the first directional coupler 88 in both the transmit and receive paths. In this way, signals applied to (or received from) each element in the antenna array will also be applied to the second directional coupler 110. It will be appreciated that the calibration process is based on a baseband beamforming system (rather than an equivalent RF beamformer technique) because phase and amplitude signal shifts are easier to implement at baseband.

A second duplexer 112 is coupled to the second directional coupler 110 to route signals to one of a bank of variable attenuators 114 or a second bank of low noise amplifiers 116 (dependent upon whether signals are being applied to or received from the antenna array 86). Specifically, a received signal is amplified, while a transmitted signal is attenuated to a dynamic range required for down conversion and conversion to digital form. Subsequent to either attenuation or amplification, signals are typically routed through a combiner network 118 before being down converted in frequency to a baseband level in a second down-converter network 120.

It will be appreciated that both the first 90 and second 116 banks of low noise amplifiers provide identical amplification. Additionally, it will be appreciated that, unlike the actual receive chain which is constrained to a specific limited signalling bandwidth of, say, 200kHz, the error correction and calibration circuitry is not bandwidth limited and therefore has a very much greater bandwidth.

Ideally, a signal that has been up-converted and then immediately down-converted (or vice versa) within the transceiver should be identical to the original, corresponding signal (i.e. identical to either those signals applied to the first error correction network 77 or those obtained from the second error correction network 98). However, if any discrepancies exist between these signals, then these discrepancies represent errors introduced by the respective transmit and receive chains. In conventional fashion, these errors are corrected in pre-emptive fashion by applying vector correction factors (weighting factors), via a feedback mechanism, in the error correction networks 77 and 98. More explicitly, signals 122 are firstly converted to a digital format in a second A/D converter 124 and then applied in turn through an error correction circuit 126 (the purpose of which will be described subsequently) and a third summing block 128. Again, the effect of the third summing block 128 is to provide a third composite signal x(t) having an unique characteristic that mimics the characteristics of the individual signals originally applied to the second A/D converter 124. Then, as will be generally understood, weighting factors for each signal branch (path) in either of the error correction networks 77 and 98 (or the error correction circuit 126) may then be determined by appropriate comparison (mapping) of the third composite signal x(t) to the first composite signal 76 or the second composite signal 104. A resultant signal e(t) from this comparison (mapping) is then subjected to a suitable convergence technique in a convergence algorithm block 130, typically implemented within a microprocessor.

There are several algorithms that may be used for the purpose of determining the weighting factors for each path; with the simplest perhaps being the technique known as Least Mean Square (LMS) convergence. For a system such as GSM (with a burst duration of 0.577ms and a calibration process which is relatively slow), the LMS algorithm is most suited. However, other convergence algorithms, such as Fast-Kalman, can also be used. As stated, the LMS algorithm is responsible for calculating suitable weighting factors that compensate for phase and amplitude errors introduced by various components in a given signal path. As will be understood, the LMS algorithm basically compares a signal with a desired form of it, and then generates an error based on the difference. Therefore, given a sufficient uncorrelated observation period, the LMS algorithm calculates a set of weighting factors for the error correction networks of the transceiver to mitigate against the effects of component induced amplitude and phase variations.

As will be understood, communication systems utilising Gaussian Minimum Shift-Keying (GMSK) require a constant communication envelope, with real-time correction possibly prohibited by a technical standard, such as in GSM. Therefore, in such circumstances, it would be usual to correct the next frame of data in the communication sequence (or the next burst transmission, e.g. the succeeding time slot). In practice, the LMS algorithm will calculate the correction weights during the active part of burst, and only correct the errors during the guard times for the next active burst. Furthermore, with specific reference to the receive chain of the transceiver 70, the requirement to repeatedly calibrate the receive chain is diminished compared against the requirement for calibration in the transmit chain because less power is dissipated in the receiver chain and, as such, components are less susceptible to temperature induced performance variation.

Unfortunately, the feedback mechanism for correcting the amplitude and phase errors introduced by components in both the transmit and receive paths of the transceiver 70 assumes that there are no errors present in the error correction and calibration circuitry 110-120, which assumption is in reality flawed. Therefore, the present invention provides a calibration mechanism for the error correction and calibration circuitry 110-120 itself, which internal calibration mechanism is ostensibly transparent to any transceiver functions. Specifically, calibration of the error correction and calibration circuitry 110-120 is achieved by applying a pseudo-random sequence on a broadband (spread spectrum) basis to the calibration circuitry, and then determining whether a processing gain for the error correction and calibration circuitry has altered.

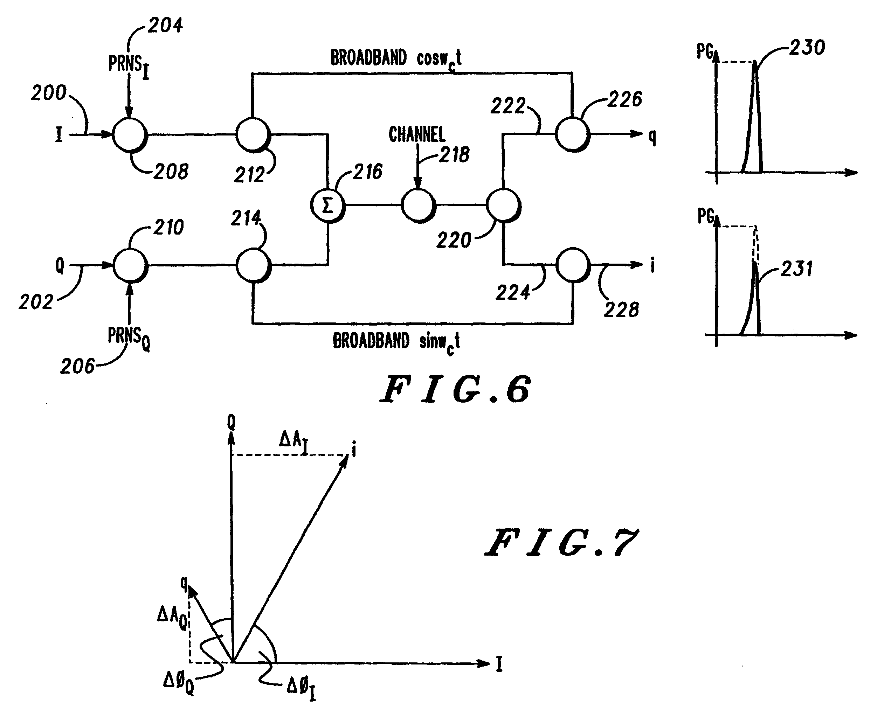

Referring firstly to FIG. 4, a plurality of channels 150-160 of fixed bandwidth are shown within a total system bandwidth 162 of a conventional communication system. Turning to FIG. 5, one of these channels 154, say channel 3, has been overlaid (for illustrative purposes) with a broadband signal 164, according to the present invention. As can be seen, the effect of overlaying a channel 154 with a broadband signal is to produce a ripple in the waveform. Furthermore, as will be appreciated, the broadband signal is available for use in a calibration process because the transceiver 70 must be capable of receiving all channels available to the communication system. Therefore, when considering a communication system such as GSM, the broadband signal could potentially be anything up to 900MHz in bandwidth, while each individual channel only having a bandwidth of 200kHz.

According to a preferred embodiment of the present invention a broadband signal having a very low power level (below any noise threshold) and having a very short pulse per bit is injected (superimposed) on top of an actual, real-time, information bearing narrowband signal (for transmission from or reception by each element in the antenna array 86 of the transceiver 70), such that the broadband signal does not corrupt the narrowband signal. Specifically, with reference to FIG. 3, a self-calibration unit generates a test sequence, such as a pseudo-random number sequence (PRNS), that is converted into analog form in a second D/A converter prior to up-link conversion in a modulation network 184. After communication through a power splitter 186, the now digitised and modulated PRNS is routed through the second directional coupler 110. As such, the digitised and modulated PRNS exhibits identical characteristic to those of a signal on a transmit or receive channel, and the subsequent apparatus appropriately down converts and routes this digitised and modulated PRNS to the second A/D converter 124, as previously described. Specifically, two orthogonal pseudo-random number sequences having an appropriate chipping rate (e.g. for a GSM based system having a 25MHz spectrum allocation for the up- and down-links, a chipping rate of up to 80ns can be used) are quadrature modulated on the midband of the available spectrum of the selected up-link or down-link. This complex passband signal is then injected at a power level below the noise floor of the system into all N branches of the error correction and calibration network 110-130. Depending on the portion of the spectrum used, the complex passband signal will take the appropriate path through either the bank of low noise amplifiers 116 or the bank of variable attenuators 114. After passing through the combiner network 118, the complex passband signal is down converted to baseband, sampled and converted to digital form. The received signal is then combined and correlated with spreading codes used for the I- and Q-channels for a time appropriate to obtain sufficient processing gain for self calibration purposes. A correlation subsequently performed between the original PRSN and the modulated-demodulated PRSN routed through the second duplexer 112 determines errors in the error correction and calibration network 110-130. In a similar manner to that previously described, a suitable convergence algorithm, such as LMS, is used to determine weighting factors for the error correction and calibration network 110-130, which weighting factors are then applied by the error correction circuit 126 during operation thereof.

FIG. 6 illustrates, in more detail, circuitry used in FIG. 3 to overlay a broadband signal on a channel, as required in FIG. 5. In the specific instance of the preferred embodiment, the self calibration unit 180 is arranged to provide quadrature I- and Q-channels having a 90° phase lag relationship. I-channel component 200 and Q-channel component 202 are respectively encoded with by separate pseudo-random number sequences (PRNS_{I} and PRNS_{Q}) 204 and 206 in combining networks 208 and 210. Subsequently, the I-channel and the Q-channel are both modulated with a broadband signal (cosω_{c}t and sinω_{c}t) in combining networks 212 and 214, respectively, before being summed together in summing network 216 to produce a composite test signal. The composite test signal produced by summing network 216 is representative of a channel 218, which composite test signal is then injected into the second directional coupler 110, as previously described. After splitting the composite test signal 218 into respective I (222) and Q (224) signal components in signal splitter 220, down conversion of the I and Q signal components is achieved by hardwiring the broadband signal (cosω_{c}t and sinω_{c}t) into mixing networks 226 and 228 in an attempt to regenerate the pseudo random number sequences (for the I and Q channels), although it is likely that the regenerated sequences contain amplitude and phase variations i and q, respectively.

Therefore, bearing in mind that respective bits of the pseudo random broadband signal (i.e. the composite test signal) are transmitted at very low (sub-noise) power levels e.g. -140dBm, and providing that a common local oscillator is used to modulate (up convert) and demodulate (down convert) the I and Q channel components for use in the error correction and calibration network 110-130, then any errors introduced into the injected pseudo random number sequences result from amplitude and phase errors introduced by the second duplexer 110, the bank of variable attenuators 114, the second bank of low noise amplifiers 116 and combiner network 118. Therefore, as will be understood, by multiplying together respective bits of the originally injected pseudo-random number sequences with the regenerated pseudo random number sequences, and then summing together for each I and Q channel component, a processing gain PG (derived from the length of the original PRSN) 230 and 231 can be determined for each channel in the error correction and calibration network 110-130. In the event that the processing gain 230 and 231 for either quadrature channel falls below a predetermined threshold, as illustrated by the graphical representation, a revision of weighting factors applied by error correction circuit 126 is required to appropriately compensate for any amplitude and phase variations.

FIG. 7 illustrates an I-channel and Q-channel error displacement introduced by conventional transceiver equipment and the error correction and calibration network 110-130. Therefore, since amplitude ΔA can be determined from a peak value of the processor gain, a phase variation Δφ can be determined by the LMS conversion algorithm (or the like), and suitable weighting factors (correction vectors) for the error correction circuit 126 determined. Consequently, since the error correction and calibration circuitry is independently calibrated to produce ostensibly zero errors, any weighting factors (vectors) applied to a signal by the error correction networks 77 and 98 for amplitude and phase correction must be correct. It is however noted that only a single mixer is uncalibrated and remains outside the self-calibration path, albeit that this mixer only has a few degrees of phase variation (over a wide ambient temperature range) and is subject to very low signal power levels.

As will be appreciated, the convergence algorithm and processing gain are typically implemented within a microprocessor (or the like). Indeed, the majority of functions performed within the calibration board of FIG. 3, generally identified by reference numeral 250, are performed within a microprocessor.

Additionally, as the weighting factors are an indication of how each path in the transceiver is behaving in terms of amplitude and phase, the present invention is capable of being able to identify faulty branches of the antenna array 86. This may be achieved by a simple comparison between the calculated weighting factors for each path and acceptable correction factors for the amplitude and phase variations in these paths. Furthermore, although the preferred embodiment of the present invention discusses the use of only one convergence algorithm, it is possible to use a separate convergence loop for the self-calibration of the error correction and calibration network to provide a simultaneous calibration process. In addition, it would also be possible to use separate down converters for the receiver and transmitter paths in order to facilitate concurrent calibration processes for these separate communication functions.

It will, of course, be understood that the above description has been given by way of example only and that modifications in detail, such as the utilisation of common circuit components between the receiver chain and the error correction and calibration network 110-130 to reduce component count, may be made within the scope of the invention. Clearly, the technique of the present invention for calibrating a calibration network using an overlaid broadband pseudo-random signal is applicable to transmitters and receiver circuitry used in isolation, although it has been described specifically in relation only to a transceiver for the purpose of brevity. Also, while the present invention may utilise the entire system bandwidth (spectrum) available to the communication device in generating the broadband signal, it will be appreciated that the broadband signal need only be relatively broad compared to the narrowband channels and that a proportion of the entire system bandwidth could therefore be used.

## Claims

1. A method of calibrating components (112-118) in at least one of a reception path (116) and a transmission path (114) of a calibration network (110-130, 180, 182) of a communication device (70) for a communication system containing a plurality of channels (150-160), the method **characterized by** comprising the steps of:
modulating a channel (150-160) having a channel bandwidth with a relatively broadband signal containing a test sequence to produce an overlaid channel, the broadband signal being broad relative to the channel bandwidth;
routing the overlaid channel through a selected complementary one of the reception (116) and transmission paths (114), the selected path containing components that introduce amplitude and phase variations into the overlaid channel;
demodulating the overlaid channel to retrieve the test sequence;
determining errors introduced into the test sequence by the selected one of the complementary reception (116) and transmission path (114);
resolving amplitude and phase variations introduced by the components in response to the errors in the test sequence;
determining a correction factor (126) appropriate to compensate for these amplitude and phase variations; and
applying the correction factor (126) in the calibration network (110-130, 180, 182).

2. The method of claim 1, wherein the test sequence has a relatively short pulse rate per bit relative to a symbol rate of an information bearing signal communicated over the channel (150-160) and a power level relatively low to that of a noise threshold of the channel (150-160).

3. The method of claim 1 or 2, wherein the calibration network (110-130, 180, 182) provides weighting factors for a beam pattern for an adaptive array of antenna elements of the communication device (70).

4. The method of any preceding claim, wherein the step of determining errors involves the step of calculating a processing gain for the calibration network (110-130, 180, 182) based upon the errors introduced into the test sequence.

5. The method of any preceding claim, wherein the step of determining a correction factor (126) appropriate to compensate for the amplitude and phase variations is determined by applying a convergence algorithm (130).

6. The method of any preceding claim, wherein the test sequence is a pseudo-random number sequence.

7. The method of any preceding claim, wherein the test sequence is applied to quadrature channels.

8. The method of any preceding claim, wherein the step of modulating is performed on a channel in real time.

9. A device for a communication system containing a plurality of narrowband channels (150-160), the device **characterized by** having:
a calibration network (110-130, 180, 182) for calibrating components (112-118) in at least one of a reception (116) and transmission path (114) of the calibration network (110-130, 180, 182);
means for modulating a channel (150-160) having a channel bandwidth with a relatively broadband signal containing a test sequence to produce an overlaid channel, the broadband signal being broad relative to the channel bandwidth;
means for routing the overlaid channel through a selected complementary one of the reception (116) and transmission paths (114), the selected path containing components (112-118) that introduce amplitude and phase variations into the overlaid channel;
means for demodulating the overlaid channel to retrieve the test sequence;
means for determining errors introduced into the test sequence by the selected one of the complementary reception (116) and transmission paths (114);
means for resolving amplitude and phase variations introduced by the components in response to the errors in the test sequence;
means for determining a correction factor (126) appropriate to compensate for these amplitude and phase variations; and
means for applying the correction factor (126) in the calibration network (110-130, 180, 182).

10. The device of claim 9, wherein the test sequence has a relatively short pulse rate per bit relative to a symbol rate of an information bearing signal communicated over the channel (150-160) and a power level relatively low to that of a noise threshold of the channel (150-160).

11. The device of claim 9 or 10, further comprising an adaptive array of antenna elements, wherein the calibration network (110-130, 180, 182) provides weighting factors for a beam pattern of the adaptive array.

12. The device of any one of claims 9 to 11, wherein the means of determining errors includes means for calculating a processing gain, based upon the errors introduced into the test sequence, for the calibration network (110-130, 180, 182).

13. The device of any one of claims 9 to 12, wherein the device is one of a radio communication device (70) and an adaptive antenna.

## Patentansprüche

1. Verfahren zum Kalibrieren von Komponenten (112-118) in wenigstens einem Empfangsweg (116) oder Sendeweg (114) eines Kalibriernetzes (110-130, 180, 182) einer Kommunikationsvorrichtung (70) für ein Kommunikationssystem, das mehrere Kanäle (150-160) enthält, wobei das Verfahren **dadurch gekennzeichnet ist, dass** es die folgenden Schritte umfasst:
ein Kanal (150-160) mit einer Känalbandbreite wird mit einem eine Prüffolge enthaltenden, relativ breitbandigen Signal moduliert, um einen überlagerten Kanal zu erzeugen, wobei das Breitbandsignal breit ist im Verhältnis zur Kanalbandbreite;
der überlagerte Kanal wird durch einen ausgewählten komplementären Empfangsweg (116) oder Sendeweg (114) geleitet, wobei der ausgewählte Weg Komponenten enthält, die Amplituden- und Phasenschwankungen in dem überlagerten Kanal verursachen;
der überlagerte Kanal wird demoduliert, um die Prüffolge zu erhalten;
es werden Fehler ermittelt, die durch den ausgewählten komplementären Empfangsweg (116) oder Sendeweg (114) in der Prüffolge verursacht wurden;
es werden Amplituden- und Phasenschwankungen aufgelöst, die durch die Komponenten in Reaktion auf die Fehler in der Prüffolge verursacht wurden;
es wird ein entsprechender Korrekturfaktor (126) ermittelt, um diese Amplituden- und Phasenschwankungen zu kompensieren; und
der Korrekturfaktor (126) wird in dem Kalibriernetz (110-130, 180, 182) angewandt.

2. Verfahren nach Anspruch 1, bei dem die Prüffolge eine relativ kurze Pulsrate pro Bit im Verhältnis zu einer Symbolrate eines über den Kanal (150-160) übertragenen, Informationen tragenden Signals und einen im Verhältnis zum Leistungspegel einer Rauschschwelle des Kanals (150-160) relativ niedrigen Leistungspegel hat.

3. Verfahren nach Anspruch 1 oder 2, bei dem das Kalibriernetz (110-130, 180, 182) Bewertungsfaktoren für ein Strahlungsmuster einer Gruppe adaptiver Antennenelemente der Kommunikationsvorrichtung (70) liefert.

4. Verfahren nach einem der vorhergehenden Ansprüche, bei dem der Schritt der Ermittlung von Fehlern den Schritt der Berechnung eines Verfahrensgewinns beziehungsweise einer Bearbeitungsverstärkung für das Kalibriernetz (110-130, 180, 182) anhand der in der Prüffolge verursachten Fehler umfasst.

5. Verfahren nach einem der vorhergehenden Ansprüche, bei dem der Schritt der Ermittlung eines für die Kompensation von Amplituden- und Phasenschwankungen geeigneten Korrekturfaktors (126) unter Anwendung eines Konvergenzalgorithmus (130) durchgeführt wird.

6. Verfahren nach einem der vorhergehenden Ansprüche, bei dem die Prüffolge eine Pseudozufallszahlenfolge ist.

7. Verfahren nach einem der vorhergehenden Ansprüche, bei dem die Prüffolge auf Quadraturkanäle angewandt wird.

8. Verfahren nach einem der vorhergehenden Ansprüche, bei dem der Schritt des Modulierens in Echtzeit auf einem Kanal durchgeführt wird.

9. Vorrichtung für ein Kommunikationssystem, das mehrere Schmalbandkanäle (150-160) enthält, wobei die Vorrichtung **dadurch gekennzeichnet ist, dass** sie folgendes umfasst:
ein Kalibriernetz (110-130, 180, 182) zum Kalibrieren von Komponenten (112-118) in wenigstens einem Empfangsweg (116) oder Sendeweg (114) des Kalibriernetzes (110-130, 180, 182) ;
eine Einrichtung zum Modulieren eines Kanals (150-160) mit einer Kanalbandbreite mit einem eine Prüffolge enthaltenden relativ breitbandigen Signal, um einen überlagerten Kanal zu erzeugen, wobei das Breitbandsignal breit ist im Verhältnis zur Kanalbandbreite;
eine Einrichtung zum Leiten des überlagerten Kanals durch einen ausgewählten komplementären Empfangsweg (116) oder Sendeweg (114), wobei der ausgewählte Weg Komponenten (112, 118) enthält, die in dem überlagerten Kanal Amplituden- und Phasenschwankungen verursachen;
eine Einrichtung zum Demodulieren des überlagerten Kanals, um die Prüffolge zu erhalten;
eine Einrichtung zur Ermittlung von Fehlern, die durch den ausgewählten komplementären Empfangsweg (116) oder Sendeweg (114) in der Prüffolge verursacht wurden;
eine Einrichtung zum Auflösen von Amplituden- und Phasenschwankungen, die durch die Komponenten in Reaktion auf die Fehler in der Prüffolge verursacht wurden;
eine Einrichtung zur Ermittlung eines Korrekturfaktors (126), der geeignet ist, diese Amplituden- und Phasenschwankungen zu kompensieren; und
eine Einrichtung zum Anwenden des Korrekturfaktors (126) in dem Kalibriernetz (110-130, 180, 182).

10. Vorrichtung nach Anspruch 9, bei der die Prüffolge eine relativ kurze Pulsrate pro Bit im Verhältnis zu einer Symbolrate eines über den Kanal (150-160) übertragenen, Informationen tragenden Signals und einen im Vergleich zum Leistungspegel einer Rauschschwelle des Kanals (150-160) relativ niedrigen Leistungspegel hat.

11. Vorrichtung nach Anspruch 9 oder 10, die ferner eine adaptive Gruppe von Antennenelementen umfasst, wobei das Kalibriernetz (110-130, 180, 182) Bewertungsfaktoren für ein Strahlungsmuster der adaptiven Gruppe liefert.

12. Vorrichtung nach einem der Ansprüche 9 bis 11, bei dem die Einrichtung zur Ermittlung von Fehlern eine Einrichtung umfasst, die für das Kalibriernetz (110-130, 180, 182) anhand der in der Prüffolge verursachten Fehler einen Verfahrensgewinn beziehungsweise eine Bearbeitungsverstärkung berechnet.

13. Vorrichtung nach einem der Ansprüche 9 bis 12, bei dem die Vorrichtung eine Kommunikationsvorrichtung (70) oder eine adaptive Antenne ist.

## Revendications

1. Procédé de calibrage de composants (112 à 118) dans au moins l'un d'un trajet (116) de réception et d'un trajet (114) d'émission d'un circuit (110 à 130, 180, 182) de calibrage d'un dispositif (70) de télécommunications pour un système de télécommunications contenant une pluralité de voies (150 à 160) à bande étroite, le procédé étant **caractérisé en ce qu'**il comprend les étapes consistant :
à moduler une voie (150 à 160) ayant une largeur de bande de voie à l'aide d'un signal à bande relativement large contenant une séquence d'essai pour produire une vole superposée, le signal à bande large étant large par rapport à la largeur de bande de vole ;
à acheminer la voie superposée par l'un, complémentaire, choisi, des trajets de réception (116) et d'émission (114), le trajet choisi contenant des composants qui introduisent des variations d'amplitude et de phase dans la voie superposée ;
à démoduler la voie superposée pour récupérer la séquence d'essai ;
à déterminer des erreurs introduites dans la séquence d'essai par celui, choisi, du trajet complémentaire de réception (116) et d'émission (114);
à résoudre les variations d'amplitude et de phase introduites par les composants en réponse aux erreurs de la séquence d'essai ;
à déterminer un facteur (126) de correction approprié pour compenser ces variations d'amplitude et de phase ; et
à appliquer le facteur (126) de correction dans le circuit (110 à 130, 180, 182) de calibrage.

2. Procédé selon la revendication 1, dans lequel la séquence d'essai a un taux de répétition d'impulsion par bit relativement court par rapport à un taux de répétition de symbole d'un signal transportant de l'information communiqué sur la voie (150 à 160) et un niveau de puissance relativement bas par rapport à celui d'un seuil de bruit de la voie (150 à 160).

3. Procédé selon la revendication 1 ou 2, dans lequel le circuit (110 à 130, 180, 182) de calibrage fournit des facteurs de pondération pour un diagramme de faisceau pour un groupement adaptatif d'éléments d'antennes du dispositif (70) de télécommunications.

4. Procédé selon l'une quelconque des revendications précédentes, dans lequel l'étape de détermination d'erreurs implique l'étape de calcul d'un gain de traitement pour le circuit (110 à 130, 180, 182) de calibrage, basé sur les erreurs introduites dans la séquence d'essai.

5. Procédé selon l'une quelconque des revendications précédentes, dans lequel l'étape de détermination d'un facteur (126) de correction approprié pour compenser les variations d'amplitude et de phase est déterminée par application d'un algorithme (130) de convergence.

6. Procédé selon l'une quelconque des revendications précédentes, dans lequel la séquence d'essai est une séquence de nombres pseudo-aléatoires.

7. Procédé selon l'une quelconque des revendications précédentes, dans lequel la séquence d'essai est appliquée à des voies en quadrature.

8. Procédé selon l'une quelconque des revendications précédentes, dans lequel de modulation se fait sur une voie en temps réel.

9. Dispositif pour un système de télécommunications contenant une pluralité de voies (150 à 160) à bande étroite, le dispositif étant **caractérisé en ce qu'**il comporte :
un circuit (110 à 130, 180, 182) de calibrage destiné à calibrer des composants (112 à 118) dans au moins l'un d'un trajet de réception (116) et d'émission (114) du circuit de calibrage (110 à 130, 180, 182) ;
un moyen destiné à moduler une voie (150 à 160) ayant une largeur de bande de voie à l'aide d'un signal à bande relativement large contenant une séquence d'essai pour produire une voie superposée, le signal à bande large étant large par rapport à la largeur de bande de voie ;
un moyen destiné à acheminer la voie superposée par l'un, complémentaire, choisi, des trajets de réception (116) et d'émission (114), le trajet choisi contenant des composants (112 à 118) qui introduisent des variations d'amplitude et de phase dans la voie superposée ;
un moyen destiné à démoduler la vole superposée pour récupérer la séquence d'essai ;
un moyen destiné à déterminer des erreurs introduites dans la séquence d'essai par celui, choisi, des trajets complémentaires de réception (116) et d'émission (114) ;
un moyen destiné à résoudre les variations d'amplitude et de phase introduites par les composants en réponse aux erreurs de la séquence d'essai ;
un moyen destiné à déterminer un facteur (126) de correction approprié pour compenser ces variations d'amplitude et de phase ; et
un moyen destiné à appliquer le facteur (126) de correction dans le circuit (110 à 130, 180, 182) de calibrage.

10. Dispositif selon la revendication 9, dans lequel la séquence d'essai a un taux de répétition d'impulsion par bit relativement court par rapport à un taux de répétition de symbole d'un signal transportant de l'information communiqué sur la voie (150 à 160) et un niveau de puissance relativement bas par rapport à celui d'un seuil de bruit de la voie (150 à 160).

11. Dispositif selon la revendication 9 ou 10, comprenant en outre un groupement adaptatif d'éléments d'antennes, dans lequel le circuit (110 à 130, 180, 182) de calibrage fournit des facteurs de pondération pour un diagramme de faisceau du groupement adaptatif.

12. Dispositif selon l'une quelconque des revendications 9 à 11, dans lequel le moyen de détermination d'erreurs comprend un moyen destiné à calculer un gain de traitement, en se basant sur les erreurs introduites dans la séquence d'essai, pour le circuit (110 à 130, 180, 182) de calibrage.

13. Dispositif selon l'une quelconque des revendications 9 à 12, dans lequel le dispositif est l'un d'un dispositif (70) de télécommunications et d'une antenne adaptative.
